# FASCICULE DE BREVET EUROPEEN

(11) **EP 2 578 557 B1**
(45) Date de publication et mention de la délivrance du brevet: **28.09.2016**
(21) Numéro de dépôt: 12187149.5
(22) Date de dépôt: 04.10.2012
(51) Int. Cl.: C05B 7/00, C05C 1/00, C05C 1/02, C05C 5/02, C05G 3/00

(54) **Composition solide hydrosoluble d'engrais compose NPK contenant une sel mixte de nitrate d'ammonium potassium et son procede de fabrication**
Feste Zusammensetzung eines wasserlöslichen NPK-Mehrnährstoffdüngers enthaltend Kalium-Ammonium-Nitrat und sein Herstellungsverfahren.
Solid water-soluble NPK compound fertiliser composition containing a salt of ammonium potassium nitrate and method for making same

(30) Priorité: 05.10.2011 BE 201100578
(43) Date de publication de la demande: 10.04.2013
(73) Titulaire: Agrinova, 7850 Enghien (BE)
(72) Inventeur: Marin, Bernard, 1300 Wavre (BE); Daubresse, Philippe, 6521 PI Den Bosch (NL)
(74) Mandataire: Coulon, Ludivine

(56) Documents cités:
- EP-A2- 0 227 884
- WO-A2-2007/084872
- FR-A1- 2 519 626
- FR-E- 82 644
- GB-A- 300 919
- GB-A- 876 565
- GB-A- 1 385 476
- US-A- 2 928 728
- US-A- 4 124 368
- US-A1- 2007 012 079
- DATABASE WPI Week 198227, Derwent Publications Ltd., London, GB; AN 1982-56659E & SU 861 350 A1 (KUIBYSHEVFOSFOR COM) 07 Septembre 1981
- DATABASE WPI Week 197944, Derwent Publications Ltd., London, GB; AN 1979-80514B & SU 647 299 A1 (KLASSEN P V) 15 Février 1979

## Description

La présente invention est relative à une composition solide d'engrais composé NPK hydrosoluble et à son procédé de fabrication.

Les engrais composés ou fertilisants NPK hydrosolubles actuellement sur le marché, qui contiennent les trois éléments essentiels nécessaires à la croissance des plantes (azote, phosphore et potassium), sont obtenus par un mélange physique de produits dits simples, qui se présentent sous la forme de poudres cristallines ou de microgranules et qui ont une valeur ajoutée importante (urée, sulfate d'ammonium ou de potassium, phosphate monoammonique, phosphate diammonique, etc.), certains présentant une nature explosive, comme le nitrate d'ammonium et le nitrate de potassium. La fabrication de ces engrais est peu flexible et comprend des mélanges physiques de ces composés dits simples pour produire les différentes formulations exigées qui doivent pouvoir présenter des proportions variables entre les 3 éléments précités. Les différents composants du mélange ont tendance à subir une ségrégation pendant le stockage ou la manutention, induisant ainsi un déséquilibre dans l'alimentation de la plante. La nature pulvérulente de ces fertilisants peut les rendre facilement sujets à la prise en masse durant le stockage et ils sont nocifs à l'inhalation.

Plutôt que de simplement mélanger les sels simples précités pour la formation des engrais NPK hydrosolubles, on a aussi envisagé de les solubiliser tout d'abord, puis de sécher et granuler la solution obtenue (voir par exemple WO 01/30724). Ce procédé reste peu flexible en matière de formulation et il est toujours tributaire des problèmes liés à l'approvisionnement des sels utilisés.

Une autre alternative envisagée a été de mettre en suspension concentrée dans l'eau des sels peu solubles destinés à composer l'engrais (voir par exemple FR-2679552).

On connaît également des procédés de fabrication d'engrais composés ternaires dans lesquels la source de potassium est du chlorure de potassium. Dans le brevet GB-876565, on fait réagir celui-ci avec de l'acide nitrique en excès ; après avoir débarrassé au maximum la bouillie de nitrate de potassium obtenue des composés chlorés formés au cours de la réaction, ladite bouillie est traitée par de l'acide phosphorique, le produit obtenu ayant été neutralisé par une base, telle que de l'ammoniac, et éventuellement granulé ensuite. Dans le brevet GB-300919, on fait réagir le chlorure de potassium avec de l'acide phosphorique ; ici aussi, il faut alors éliminer l'acide chlorhydrique formé avant de mélanger la bouillie liquide de phosphate de potassium avec de l'ammoniac. Enfin, dans le brevet FR-1322288, on prépare des bouillies de phosphate monoammonique et/ou diammonique en faisant réagir dans diverses conditions de l'acide phosphorique et de l'ammoniac, puis on effectue une granulation de ces bouillies sur des fines recyclées sur lesquelles on a déposé du chlorure de potassium sous forme solide.

Il s'agit donc ici de procédés fort complexes nécessitant plusieurs opérations successives, notamment pour éliminer dans la mesure du possible les composés chlorés formés. Cette élimination s'effectue par dégagement de vapeurs de chlore nocives et très corrosives. Enfin la présence de chlorure de potassium dans un engrais, et cela même à l'état de traces, est à exclure selon les règles en vigueur de certains pays.

On a aussi envisagé de faire réagir un acide avec une base, généralement de l'hydroxyde de potassium, et donc de procéder à une réaction acido-basique. Au produit de cette réaction on ajoute alors une source d'azote, telle que de l'urée, des sels d'ammonium ou des nitrates (voir par exemple FR-2519626, US-5174806 et EP-0229535). L'enseignement selon ces documents ne résout que partiellement les problèmes de la technique antérieure. Les compositions restent encore tributaires de l'approvisionnement en certains sels, dont la manipulation peut être dangereuse, comme le nitrate d'ammonium, ou de l'emploi de matières organiques, telles que l'urée, dont l'assimilation par les plantes n'est pas suffisamment performante.

On connaît aussi un procédé dans lequel on fait réagir à températures très élevées de l'acide phosphorique avec une base, telle que de l'ammoniac, de façon à former un produit réactionnel riche en polyphosphates, dans lequel on peut ensuite incorporer, après refroidissement, d'autres agents fertilisants (voir brevet GB-1385476).

On connait aussi un procédé dans lequel on fait réagir de l'acide phosphorique et de l'acide nitrique avec de l'ammoniac gazeux, on évapore la soluton obtenue, et on ammonise la solution évaporée en la mélangeant à du sulfate de potassium. On granule ensuite la suspension obtenue (SU 861350).

On connaît enfin des fertilisants formés d'une poudre de sel double de nitrate d'ammonium-nitrate de potassium (v. WO2007/084872 et US 4,124,368).

La présente invention a pour objet la mise au point d'un fertilisant NPK totalement hydrosoluble et d'un procédé pour sa fabrication qui ne présente pas les inconvénients précités, en particulier ceux de coût élevé des matières premières précitées, de formulation complexe du fertilisant, de prise en masse durant le stockage, de ségrégation pendant celui-ci et la manutention ainsi que d'utilisation de produits classés comme dangereux, comme le nitrate d'ammonium. Avantageusement ce procédé doit être simple et éviter les complications dues à l'élimination de sous-produits toxiques et corrosifs.

On résout ces problèmes suivant l'invention par une composition solide d'engrais composé hydrosoluble contenant, comme éléments essentiels, N, P et K, et se présentant sous forme de granules homogènes qui comprennent un produit de réaction acido-basique et présentent chacune une composition identique, ce produit de réaction, issu d'une réaction entre de l'acide phosphorique, de l'acide nitrique, de l'hydroxyde de potassium et de l'ammoniac, contenant un sel mixte de nitrate d'ammonium-potassium, répondant à la formule (NH₄)ₓ Ky (NO₃)_{Z}, dans laquelle x = 0,75, y = 0,25 et z = 1,00.

La composition d'engrais suivant l'invention est donc le résultat d'une réaction entre, d'une part, deux acides, l'acide phosphorique et l'acide nitrique, et, d'autre part, deux bases, l'hydroxyde de potassium et l'ammoniac. Ces composés sont des matières premières facilement disponibles sur le marché et d'un coût réduit par rapport aux produits dits simples utilisés dans la technique antérieure. Par ailleurs, comme chaque composant de départ introduit dans la réaction ne contient qu'un seul des éléments essentiels pour l'engrais composé, soit N, soit P, soit K, il est particulièrement aisé de doser chacun des réactifs et d'obtenir ainsi de manière particulièrement simple des formulations de compositions très variables. De plus ces engrais sont totalement homogènes, c'est-à-dire que les granules obtenus présentent chacun une composition identique, celle du produit de réaction acido-basique. Suivant une forme de réalisation avantageuse de l'invention, les granules ont une forme sphérique, sont de nature cristalline et présentent des teneurs identiques en % en poids en N, P et K. La forme granulée et sphérique diminue le risque de prise en masse et l'homogénéité de la composition des granules supprime les risques de ségrégation. Ces granules ne sont pas pulvérulents et ils sont à 100% solubles dans l'eau.

Il faut en particulier noter que les engrais suivant l'invention contiennent l'azote au moins partiellement sous forme d'un sel mixte de nitrate d'ammonium-potassium qui est un sel parfaitement soluble dans l'eau, et dont la dissolution libère des formes d'azote nitrique facilement assimilables par les plantes au contraire de l'urée. La limite de solubilité dans l'eau de ce sel est de 1787 g par litre. De plus, ce sel d'azote ne présente aucun danger d'explosion à l'état sec.

Par sel mixte de nitrate d'ammonium-potassium il faut entendre, suivant l'invention, un composé appelé gwihabaite qui répond à la formule (NH₄)ₓK_{y}(NO3)_{z} dans laquelle x = 0,75, y = 0,25 et z= 1,00. Ce sel n'est pas envisageable dans les compositions d'engrais selon l'état de la technique. Avantageusement, la composition d'engrais suivant l'invention peut contenir entre 5 % et 68 % en poids dudit au moins un sel mixte d'ammonium-potassium.

Etant donné la facilité de formulation des compositions d'engrais suivant l'invention, on peut envisager des engrais contenant des teneurs pondérales très variables des différents éléments. On peut envisager des teneurs pondérales en N variant de 13 à 30 % en poids, en P₂O₅ de 5 à 50 % en poids et en K₂O de 5 à 20 % en poids, la somme des teneurs des composants étant égale ou inférieure à 100 %.

De préférence, la composition peut contenir, pour 100 kg d'engrais, des teneurs pondérales en N, P₂O₅ et K₂O choisies dans le groupe : 27-9-9, 20-20-20, 20-10-20 et 15-15-25.

Suivant l'invention on a prévu un procédé de fabrication d'une composition solide d'engrais composé hydrosoluble contenant, comme éléments essentiels N, P, et K, ce procédé comprenant une réaction acido-basique exothermique entre de l'acide phosphorique, de l'acide nitrique et de l'ammoniac donnant lieu à un produit de réaction acido-basique et une granulation . Dans ce procédé, ladite réaction acido-basique exothermique est obtenue par mélange entre, comme composants de départ sous forme liquide ou gazeuse, de l'acide phosphorique et de l'acide nitrique, à titre d'acides, et de l'hydroxyde de potassium et de l'ammoniac, à titre de bases, lesdits acides étant introduits dans un réacteur en formant un milieu acide auquel sont additionnées lesdites bases en solution ou sous forme gazeuse, ce qui donne un produit de réaction acido-basique liquide qui contient un sel mixte de nitrate d'ammonium-potassium, répondant à la formule (NH₄)ₓ Ky (NO₃)_{Z}, dans laquelle x = 0,75, y = 0,25 et z = 1,00 et qui est soumis à ladite granulation, lesdits composants de départ contenant chacun un seul desdits éléments essentiels N, P ou K.

Les réactions acide-base étant très exothermiques, la chaleur dégagée est suffisante pour porter la température du mélange au-dessus de 60°C, température à laquelle tous les constituants du mélange sont en solution. Il est par ailleurs préférable que la température de la réaction acide-base ne dépasse pas 95°C. L'excès de chaleur dégagée peut être récupéré et être utilisé par exemple dans l'étape de granulation où il faut évaporer l'eau présente dans le produit de réaction acido-basique ou pour son maintien à une température supérieure ou égale à 60°C, avant son injection dans le lit fluidisé.

Etant donné le mode de production (réaction acide-base), il est particulièrement aisé de produire des engrais légèrement acides (pH entre 5,5 et 6,5) ce qui prévient la précipitation du calcaire généralement présent dans l'eau utilisée pour dissoudre les engrais.

On peut avantageusement aussi envisager que la réaction acido-basique comprenne en outre une addition d'acide sulfurique, comme acide additionnel.

Les acides utilisés sont donc l'acide nitrique, l'acide phosphorique et éventuellement en outre par exemple l'acide sulfurique. Les concentrations des acides utilisés sont de préférence, mais non exclusivement, celles des acides concentrés disponibles commercialement :
- pour l'acide nitrique, les concentrations sont de préférence comprises entre 60 et 69 % en poids,
- pour l'acide phosphorique les concentrations sont de préférence comprises entre 70 et 80 % en poids, et
- pour l'acide sulfurique les concentrations sont de préférence comprises entre 95 et 97 % en poids. Ces acides commerciaux contiennent tous une part d'eau à éliminer lors de la granulation.

Les bases utilisées sont l'hydroxyde de potassium et l'ammoniac. Au niveau manutention il est plus facile d'utiliser l'hydroxyde de potassium sous forme de solution aqueuse concentrée, de préférence entre 40 et 50 % en poids, et l'ammoniac sous forme de solution aqueuse de concentration comprise de préférence entre 19 et 25 % en poids. L'ammoniac gazeux peut aussi être utilisé, sa solubilisation dans l'eau ayant lieu dans le milieu réactionnel aqueux.

Ces composants sont donc au départ liquides, l'ammoniac pouvant éventuellement se présenter sous forme gazeuse.

Suivant l'invention, on utilise donc, comme source d'azote, de l'acide nitrique conjointement à de l'ammoniac, de manière que ces deux substances aient l'occasion de réagir entre elles en présence d'hydroxyde de potassium, en formant ainsi ledit au moins un sel mixte de nitrate d'ammonium-potassium.

Avantageusement, le procédé utilisé pour préparer les compositions d'engrais NPK de différentes formulations suivant l'invention se déroule de la manière suivante. Les acides nécessaires à la production de la formulation à produire sont introduits dans un réacteur muni d'un agitateur et d'un système d'échange de chaleur. Les bases en solution ou sous forme gazeuse sont ensuite additionnées dans le milieu acide, la réaction acido-basique étant fortement exothermique. Il peut être nécessaire de refroidir le mélange pendant l'addition des bases et de récupérer la chaleur excessive pour l'étape de granulation ou pour maintenir le produit liquide de réaction acido-basique obtenu à une température supérieure ou égale à 60°C, avant l'injection dans le lit fluidisé.

Il faut noter que l'ordre d'addition des réactifs n'est pas critique, mais il est préférable pour minimiser les problèmes potentiels de corrosion de charger le réacteur de la manière suivante :
1) acide phosphorique
2) éventuellement acide sulfurique
3) acide nitrique
4) hydroxyde de potassium
5) ammoniac.

On peut aussi prévoir que la composition d'engrais composé suivant l'invention contienne en outre au moins un additif courant dans ce domaine, par exemple des oligo-éléments tels que le zinc, le cuivre, le manganèse, le fer, le molybdène et le bore, ou, le cas échéant, des colorants capables de donner une coloration spécifique à chaque formulation.

Les oligo-éléments peuvent être introduits sous forme de sels ou complexes solubles dans l'eau. Les oligoéléments (Cu, Fe, Mn, Mo, Zn) peuvent être ajoutés sous forme de complexes comme par exemple les complexes EDTA ou DTPA pour le fer. Le bore peut être ajouté sous forme de borate. Alternativement, les métaux peuvent être ajoutés sous forme de sels comme par exemple les sulfates, et l'agent complexant comme l'EDTA (ou un de ses sels) peut être ajouté séparément dans la solution.

La réaction acido-basique suivant l'invention peut être effectuée de manière discontinue, par lot, ou en continu si tous les réactifs sont additionnés dans le réacteur de façon co-courante dans les proportions adéquates.

Au cours de la réaction, la température du mélange réactionnel monte rapidement à 60°C lorsque les bases et les acides sont mélangés. La température du mélange réactionnel doit être maintenue de préférence entre 65 et 95°C de façon à maintenir tous les constituants en solution.

Suivant un mode de réalisation préféré de l'invention ladite granulation comprend une injection dudit produit de réaction acido-basique liquide dans un lit de particules solides fluidisé par un gaz chaud ascendant.

Avantageusement, le lit est formé de particules solides du produit de réaction acido-basique granulé.

La solution préparée comme décrit plus haut et maintenue au-dessus de 60°C peut être injectée dans un granulateur en lit fluidisé. Le granulateur en lit fluidisé est composé d'une chambre dans laquelle un courant gazeux ascendant, préchauffé, est injecté à travers une plaque perforée située à la base de la chambre. Ce flux de gaz chaud, par exemple d'air chaud, maintient en suspension les particules solides présentes dans la chambre, en formant un lit fluidisé. La solution à granuler est injectée par des atomiseurs dans le lit fluidisé. Les gouttelettes formées viennent se déposer sur les particules en suspension dans le lit fluidisé en formant autour d'elles un mince film, l'évaporation de l'eau laissant une fine couche solide cristalline sur la particule. La répétition de ce mécanisme est à la base de la croissance des granulés. Les granulés produits sortent en continu du granulateur et sont tamisés. Les granulés de bonne dimension sont conservés, les granulés trop petits sont réinjectés dans le granulateur, les granulés de trop grande dimension sont broyés et réinjectés dans le granulateur. L'avantage de ce procédé de granulation est que l'obtention des granulés à partir d'une solution se fait en une seule étape et produit des granulés non poussiéreux de forme sphérique et de nature cristalline, dont chaque granule présente une composition identique (en % en poids) en N, P et K, dans un rapport prédéterminé. Ce type de granulation peut se faire soit en lot, mais de préférence en continu pour la production de volumes importants.

Il est aussi possible de former des granulés à partir des solutions obtenues par réactions chimiques en utilisant d'autres types de granulateurs couramment utilisés pour la production d'engrais, tels que les granulateurs à tambour, les granulateurs à assiettes tournantes, les tours de prilling ou autres mélangeurs. Toutes ces technologies requièrent cependant plusieurs étapes dont l'évaporation d'une bonne partie ou de la totalité de l'eau de la solution, suivie de l'étape de granulation proprement dite, généralement complétée par un séchage.

L'invention est illustrée ci-dessous par des exemples. Il faut comprendre que ces exemples ne sont pas limitatifs. En effet, le procédé suivant l'invention permet une grande flexibilité dans le choix des rapports acides / bases pour autant que le pH final de l'engrais soit compatible avec son domaine d'utilisation. Dans ces exemples les parties indiquées sont exprimées en poids.

### Exemple 1

### Fabrication de 100 kg de composition fertilisante granulée NPK 20-20-20

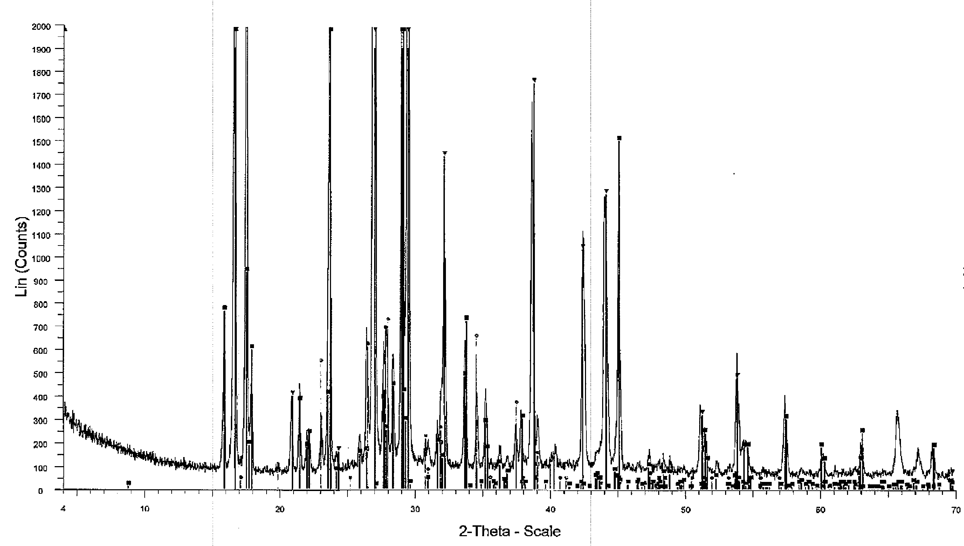

36,7 parties d'acide phosphorique à 74 % sont introduites dans un réacteur muni d'un agitateur, 64,3 parties d'acide nitrique à 69 % sont ensuite rapidement ajoutées. A ce mélange, 48,9 parties de solution d'hydroxyde de potassium à 48 % sont ajoutées lentement. La température monte rapidement au-dessus de 60°C et elle est maintenue dans une fourchette de 70 à 85°C. 61,1 parties d'ammoniaque à 19,8 % sont ensuite additionnées lentement tout en maintenant la température à une valeur maximum de 95°C. 0,42 partie de solution de Mn EDTA (6,2% en Mn), 0,17 partie de solution de Cu EDTA (9,1% en Cu), 0,32 partie de solution de Zn EDTA (9,5% en Zn) et 0,53 partie de solution de borate (1,9%) (Solubor) sont additionnées dans le réacteur. La solution obtenue est ensuite granulée en lit fluidisé. Cette composition fertilisante a été soumise à une analyse spectrale courante par diffraction des rayons X (DRX). Le spectre obtenu est illustré sur la figure unique annexée qui illustre un graphique où les valeurs en abscisse représentent l'angle de diffraction et celles en ordonnée l'intensité du pic. Dans ce graphique les pics soulignés par un symbole
- attestent la présence du sel mixte de nitrate d'ammonium-potassium. La composition de cet exemple contient environ 30% en poids de ce sel mixte.

### Exemple 2

### Fabrication de 100 kg de composition fertilisante granulée NPK 27-9-9

17,1 parties d'acide phosphorique à 74% et 91,4 parties d'acide nitrique à 69% sont ajoutées dans un réacteur muni d'un agitateur. 22,9 parties d'hydroxyde de potassium à 48%, puis 85,7 parties d'ammoniaque à 19,9% sont ajoutées progressivement. La température du mélange réactionnel est contrôlée à 91 °C. Ensuite 0,4 partie de Mn EDTA (6,2 % en Mn), 0,2 partie de Cu EDTA (9,1% en Cu), 0,3 partie de Zn EDTA (9,5 % en Zn) et 0,5 partie de solution de borate (1,9%) sont ajoutées dans le réacteur. La solution alors obtenue est granulée en lit fluidisé. La composition des granules obtenus selon cet exemple contiennent environ 68% en poids de sel mixte de nitrate d'ammonium-potassium.

### Exemple 3

### Fabrication de 100 kg de composition fertilisante granulée NPK 20-10-20

Dans un réacteur muni d'un agitateur sont ajoutées successivement 18,1 partis d'acide phosphorique à 74%, 12,5 parties d'acide sulfurique à 96% et 66,4 parties d'acide nitrique à 69%. Tout en contrôlant la température du mélange réactionnel à 93°C, on ajoute ensuite 49,6 parties d'hydroxyde de potassium à 48% et 62,3 parties d'ammoniaque à 19,8%. Ensuite 0,4 partie de Mn EDTA (6,2 % en Mn), 0,2 partie de Cu EDTA (9,1% en Cu), 0,3 partie de Zn EDTA (9,5 % en Zn) et 0,5 partie de solution de borate (1,9%) sont ajoutées dans le réacteur. La solution alors obtenue est granulée en lit fluidisé. La composition des granules obtient contient non seulement un sel mixte de nitrate d' ammonium-potassium, mais aussi un autre sel composé du nitrate-sulfate d'ammonium-potassium, dû à l'utilisation d'acide sulfurique.

### Exemple 4

### Fabrication de 100 kg de composition fertilisante granulée NPK 15-15-25.

31.4 parties d'acide phosphorique à 74 % et 68,1 parties d'acide nitrique à 69 % sont ajoutées dans un réacteur muni d'un agitateur. 65,9 parties d'hydroxyde de potassium à 48 % suivies de 35,3 parties d'ammoniaque à 19,8 % sont ensuite ajoutées progressivement. La température du mélange réactionnel est contrôlée à 90°C. 0,4 partie de Mn EDTA (6,2 % en Mn), 0,2 partie de Cu EDTA (9,1 % en Cu), 0,3 partie de Zn EDTA (9,5 % en Zn) et 0,5 partie de solution de borate (1,9 %) sont additionnées dans le réacteur. La solution obtenue est granulée en lit fluidisé.

On peut résumer les avantages de l'invention de la manière suivante : Le procédé est simple : il s'agit d'une synthèse en une étape, qui ne demande aucune élimination de sous-produits toxiques ou corrosifs. Il utilise uniquement des composants de départ liquides ou gazeux, ce qui facilite la manipulation, ces composants de départ étant des produits de base de l'industrie chimique, ce qui réduit les coûts et permet une plus grande flexibilité d'approvisionnement. Le procédé fournit une composition de fertilisants NKP totalement hydrosolubles, de nature cristalline et de forme granulée qui est homogène , c'est-à-dire que chaque granule contint une teneur identique en chacun des trois éléments essentiels. La réaction est exothermique et fournit une partie de l'énergie nécessaire à l'évaporation de l'eau ou au maintien du produit réactionnel liquide à une température égale ou supérieure à 60°C. Il permet une grande souplesse au niveau de la composition finale, tout en ne nécessitant l'utilisation que de 4 composants de départ. Il faut en effet noter que ceux-ci ne contiennent chacun qu'un seul des éléments essentiels de l'engrais composé à produire. La réaction acido-basique se fait donc en l'absence de tout composant de départ contenant au moins deux des éléments essentiels de l'engrais à produire. La formulation en est ainsi grandement facilitée et le pH peut être facilement ajusté entre 5 et 8, et de préférence entre 5,5 et 6,5, pour éviter la précipitation du calcaire lorsque l'engrais est mis en solution dans l'eau. Le procédé évite de ce fait l'utilisation de nitrate d'ammonium comme produit de départ, celui-ci étant dangereux à manipuler et classé Seveso.

On peut donc ainsi exclure, pour la formation de la composition suivant l'invention, l'utilisation de l'urée, ou encore de sels chlorés, tels que le chlorure de potassium.

Il doit être entendu que l'invention n'est en aucune façon limitée aux formes de réalisation décrites ci-dessus et que bien des modifications peuvent y être apportées sans sortir du cadre des revendications annexées.

## Revendications

1. Composition solide d'engrais composé hydrosoluble contenant, comme éléments essentiels, N, P et K, et se présentant sous forme de granules homogènes qui comprennent un produit de réaction acido-basique et présentent chacun une composition identique, **caractérisée en ce que** ce produit de réaction, issu d'une réaction entre de l'acide phosphorique, de l'acide nitrique, de l'hydroxyde de potassium et de l'ammoniac, contient un sel mixte de nitrate d'ammonium-potassium répondant à la formule (NH₄)ₓK_{y}(NO₃)_{z}, dans laquelle x = 0,75, y = 0,25 et z = 1,00.

2. Composition suivant la revendication 1, **caractérisée en ce qu'**elle contient entre 5 % et 68 % en poids dudit au moins un sel mixte d'ammonium-potassium.

3. Composition suivant l'une des revendications 1 et 2, **caractérisée en ce qu'**elle contient des teneurs pondérales en N variant de 13 à 30 % en poids, en P₂O₅ de 5 à 50 % en poids et en K₂O de 5 à 20 % en poids.

4. Composition suivant la revendication 3, **caractérisée en ce qu'**elle contient, pour 100 kg d'engrais, des teneurs pondérales en N, P₂O₅ et K₂O choisies dans le groupe : 27-9-9, 20-20-20, 20-10-20 et 15-15-25.

5. Composition suivant l'une quelconque des revendications 1 à 4, **caractérisée en ce qu'**elle présente des granules de forme sphérique et de nature cristalline, dont les granules présentent des teneurs identiques en % en poids en N, P et K.

6. Procédé de fabrication d'une composition solide d'engrais composé hydrosoluble contenant, comme éléments essentiels N, P, et K, comprenant une réaction acido-basique exothermique entre de l'acide phosphorique, de l'acide nitrique et de l'ammoniac donnant lieu à un produit de réaction acido-basique, et une granulation,
**caractérisé en ce que** ladite réaction acido-basique exothermique est obtenue par mélange entre, comme composants de départ sous forme liquide ou gazeuse, de l'acide phosphorique et de l'acide nitrique, à titre d'acides, et de l'hydroxyde de potassium et de l'ammoniac, à titre de bases, lesdits acides étant introduits dans un réacteur en formant un milieu acide auquel sont additionnées lesdites bases en solution ou sous forme gazeuse, ce qui donne un produit de réaction acido-basique liquide qui contient un sel mixte de nitrate d'ammonium-potassium, répondant à la formule (NH₄)ₓK_{y}(NO₃)_{z}, dans laquelle x = 0,75, y = 0,25 et z = 1,00 et qui est soumis à ladite granulation, lesdits composants de départ contenant chacun un seul desdits éléments essentiels N, P ou K.

7. Procédé suivant la revendication 6, **caractérisé en ce que** la réaction acido-basique comprend en outre une addition d'acide sulfurique, comme acide additionnel.

8. Procédé suivant l'une des revendications 6 et 7, **caractérisé en ce que** l'ammoniac est mélangé aux autres composants de départ sous la forme d'une solution aqueuse ou sous forme gazeuse.

9. Procédé suivant l'une des revendications 6 à 8, **caractérisé en ce que** ladite granulation comprend une injection dudit produit de réaction acido-basique dans un lit de particules solides fluidisé par un gaz chaud ascendant.

10. Procédé suivant la revendication 9, **caractérisé en ce que** le lit est formé de particules solides du produit de réaction acido-basique granulé.

## Patentansprüche

1. Feste Zusammensetzung eines wasserlöslichen Mehrnährstoffdüngers, welcher als wichtigste Bestandteile N, P und K enthält, und in Form von homogenen Körnern vorliegt, die ein sauer-basisches Reaktionsprodukt umfassen und jeweils eine identische Zusammensetzung aufweisen, **dadurch gekennzeichnet, dass** dieses Reaktionsprodukt, hervorgegangen aus einer Reaktion zwischen Phosphorsäure, Salpetersäure, Kaliumhydroxid und Ammoniak, ein gemischtes Salz von Ammonium-Kalium-Nitrat entsprechend der Formel (NH₄)ₓK_{y}(NO₃)_{z} enthält, wobei x = 0,75, Y = 0,25 und z = 1,00.

2. Zusammensetzung nach Anspruch 1, **dadurch gekennzeichnet, dass** sie zwischen 5 Gew.-% und 68 Gew.-% des erwähnten zumindest einen gemischten Ammonium-Kalium-Salzes enthält.

3. Zusammensetzung nach einem der Ansprüche 1 und 2, **dadurch gekennzeichnet, dass** sie Gewichtsanteile an N zwischen 13 und 30 Gew.-%, an P₂O₅ von 5 bis 50 Gew.-% und an K₂O von 5 bis 20 Gew.-% enthält.

4. Zusammensetzung nach Anspruch 3, **dadurch gekennzeichnet, dass** sie, für 100 kg Dünger, Gewichtsanteile an N, P₂O₅ und K₂O ausgewählt aus folgender Gruppe enthält: 27-9-9, 20-20-20, 20-10-20 und 15-15-25.

5. Zusammensetzung nach einem der Ansprüche 1 bis 4, **dadurch gekennzeichnet, dass** sie Körner in Kugelform und kristalliner Art aufweist, wobei die Körner identische Gehalte in Gew.-% an N, P und K enthalten.

6. Verfahren zur Herstellung einer festen Zusammensetzung eines wasserlöslichen Mehrnährstoffdüngers, welcher als wichtigste Bestandteile N, P und K enthält, das eine exothermische sauer-basische Reaktion zwischen der Phosphorsäure, der Salpetersäure und dem Ammoniak, welche zu einem sauer-basischen Reaktionsprodukt führt, und eine Granulation umfasst,
**dadurch gekennzeichnet, dass** die erwähnte exothermische sauer-basische Reaktion durch Mischung zwischen, als Ausgangsbestandteilen in flüssiger oder gasförmiger Form, Phosphorsäure und Salpetersäure als Säuren, und Kaliumhydroxid und Ammoniak als Basen erhalten wird, wobei die erwähnten Säuren in einen Reaktor eingebracht werden und ein saures Milieu bilden, dem die erwähnten Basen als Lösung oder gasförmig zugesetzt werden, was ein flüssiges sauer-basisches Reaktionsprodukt ergibt, das ein gemischtes Salz von Ammonium-Kalium-Nitrat enthält, entsprechend der Formel (NH₄)ₓK_{y}(NO₃)_{z}, wobei x = 0,75, y = 0,25 und z = 1,00 und das der erwähnten Granulation unterzogen wird, wobei die erwähnten Ausgangsbestandteile jeweils einen einzigen der wesentlichen Bestandteile N, P oder K enthalten.

7. Verfahren nach Anspruch 6, **dadurch gekennzeichnet, dass** die sauer-basische Reaktion ferner eine Hinzufügung von Schwefelsäure, als zusätzliche Säure, umfasst.

8. Verfahren nach einem der Ansprüche 6 und 7, **dadurch gekennzeichnet, dass** der Ammoniak zu den anderen Ausgangsbestandteilen in Form einer wässrigen Lösung oder gasförmig hinzugefügt wird.

9. Verfahren nach einem der Ansprüche 6 bis 8, **dadurch gekennzeichnet, dass** die erwähnte Granulation eine Einspritzung des erwähnten sauer-basischen Reaktionsprodukts in eine Feststoff-Wirbelschicht durch ein aufsteigendes warmes Gas umfasst.

10. Verfahren nach Anspruch 9, **dadurch gekennzeichnet, dass** die Schicht aus Feststoffen des gekörnten sauer-basischen Reaktionsprodukt gebildet ist.

## Claims

1. A solid composition of water-soluble fertiliser compound containing N, P and K as essential elements and in the form of homogeneous granules comprising an acid-base reaction product and each of identical composition, **characterized in that** this reaction product derived from reaction between phosphoric acid, nitric acid, potassium hydroxide and ammonia contains a mixed salt of ammonium-potassium nitrate meeting formula (NH₄)ₓK_{y}(NO₃)_{z} wherein x = 0.75, y = 0.25 and z = 1.00.

2. The composition according to claim 1, **characterized in that** it contains between 5 % and 68 % by weight of said at least one mixed ammonium-potassium salt.

3. The composition according to one of claims 1 and 2, **characterized in that** it contains weight contents of N varying from 13 to 30 weight %, of P₂O₅ varying from 5 to 50 weight % and of K₂O varying from 5 to 20 weight %.

4. The composition according to claim 3, **characterized in that** per 100 kg of fertiliser it contains weight contents of N, P₂O₅ and K₂0 selected from the group: 27:9:9, 20:20:20, 20:10:20 and 15:15:25.

5. The composition according to any of claims 1 to 4, **characterized in that** it is in the form of granules of spherical shape and crystalline type, the granules having identical contents in weight % of N, P and K.

6. A process to manufacture a solid composition of water-soluble fertiliser compound containing N, P and K as essential elements, comprising an exothermal acid-base reaction between phosphoric acid, nitric acid and ammonia giving rise to an acid-base reaction product, and granulation,
**characterized in that** said exothermal acid-base reaction is obtaining by mixing phosphoric acid and nitric acid as acids and potassium hydroxide and ammonia as bases, as starting compounds in liquid or gaseous form, said acids being placed in a reactor to form an acid medium to which are added said bases in solution or in gaseous form, to give a liquid acid-base reaction product containing a mixed ammonium-potassium nitrate salt meeting formula (NH₄)ₓK_{y}(NO₃)_{z} wherein x = 0.75, y = 0.25 and z = 1.00, and which is subjected to said granulation, said starting components each containing only one of said essential elements N, P or K.

7. The process according to claim 6, **characterized in that** the acid-base reaction further comprises the addition of sulfuric acid as additional acid.

8. The process according to one of claims 6 and 7, **characterized in that** the ammonia is mixed with the other starting components in the form of an aqueous solution or in gaseous form.

9. The process according to one of claims 6 to 8, **characterized in that** said granulation comprises the injection of said acid-base reaction product into a bed of solid particles fluidised by a hot, rising gas.

10. The process according to claim 9, **characterized in that** the bed is formed of solid particles of the granulated acid-base reaction product.
